Europäisches Patentamt

European Patent Office

Office européen des brevets

(19)

(11) Veröffentlichungsnummer: **0 191 934**
**B1**

(12) **EUROPÄISCHE PATENTSCHRIFT**

(45) Veröffentlichungstag der Patentschrift: **09.05.90**

(51) Int. Cl.⁵: **B 60 R 25/04**

(21) Anmeldenummer: **85116052.3**

(22) Anmeldetag: **17.12.85**

(54) Diebstahlsicherung für Kraftfahrzeuge.

(30) Priorität: **21.02.85 DE 3505971**

(43) Veröffentlichungstag der Anmeldung:
**27.08.86 Patentblatt 86/35**

(45) Bekanntmachung des Hinweises auf die
Patenterteilung:
**09.05.90 Patentblatt 90/19**

(84) Benannte Vertragsstaaten:
**DE FR GB IT SE**

(56) Entgegenhaltungen:
**AT-B- 320 466**
**DE-A-2 436 835**
**DE-A-2 926 304**
**DE-A-3 005 890**
**FR-A-2 544 782**
**US-A-4 157 479**

(73) Patentinhaber: **VALEO NEIMAN**
**12bis, rue Maurice Berteaux**
**F-78290 CROISSY-SUR-SEINE (FR)**

(72) Erfinder: **Hagberg, Peter**
**Klarinettvaegen 76**
**S-43400 Kungsbacka (SE)**
Erfinder: **Buss, Klaus**
**Alte Ley 8**
**D-5657 Haan 1 (DE)**
Erfinder: **Kuntsson, Evan**
**Dr. Forselins Gata 58**
**S-41326 Göteborg (SE)**

(74) Vertreter: **Patentanwaltsbüro Cohausz & Florack**
**Postfach 14 01 20 Schumannstrasse 97**
**D-4000 Düsseldorf 1 (DE)**

Beschreibung

Die Erfindung betrifft eine Diebstahlsicherung für Kraftfahrzeuge genäß dem Oberbegriff des Anspruche 1.

Eine Diebstahlsicherung ist aus der DE—A—29 29 772 bekannt. Bei dieser bekannten Diebstahlsicherung betätigt die Schlüsselspitze bei vollständig eingestecktem Schlüssel einen Druckschalter, der eine Abfrageschaltung des Schlosses in Gang setzt. Hierdurch werden im Schlüssel angeordnete Widerstände abgefragt, so daß nur bei den passenden bzw. richtigen Widerständen des Schloß betätigt werden kann. Der Druckschalter ist auch durch solche Schlüssel betätigbar, die zwar in den Schlüsselkanal einsteckbar, aber nicht die richtige Codierung bzw. die passenden Widerstände besitzt, so daß auch durch einen falschen Schlüssel eine Betätigung des Schalters ermöglich wird. Ferner kann ein solcher Schlüssel nicht dazu verwendet werden, von ferne einen Sendeimpuls abzugeben, um drahtlos ein Schloß zu öffnen.

Ferner ist es aus der DE—B 23 07 725 bekannt, statt eines Schlüssels einen Stecker zu verwenden, der ein Halbleiterelement enthält, das einer Schaltung einer elektronischen Diebstahlsicherung fehlt. Durch Einbringen des Steckers wird die elektronische Schaltung der Diebstahlsicherung ergänzt und damit ein Inbetriebsetzen des Kraftfahrzeuges ermöglicht. Ein Senden vom Impulsen aus einer Entfernung ist ausgeschlossen.

Aus der DE—A—30 05 890 ist ein Schlüssel mit einem miniaturisierten Sender bekannt, der ein digitales Codewort aussendet. Der konventionelle Schlüssel weist einen Schaft mit Einschnitten auf, so daß das Kraftfahrzeug nur durch einen mechanisch und elektronisch gleichzeitig passenden Schlüssel gestartet werden kann. Der die Codierschaltung in Gang setzende Schalter wird beim Einstecken des Schlüssels in das Zündschloß betätigt. Dieser Schlüssel benötigt eine eigene Batterie, die bei Ausfall den Sender funktionslos macht.

In der nicht vorveröffentlichten deutschen Patentanmeldung 33 30 740 wird ein Lenkschloß für ein Kraftfahrzeug beschrieben, dessen Schlüsselschaft nicht Zuhaltungen eines Zylinderkerns betätigt, sondern ein Infrarotsignal aussendet, das von einem Empfangsteil aufgenommen und einer elektrischen Decodierungsschaltung zugeführt wird, um bei richtigem Signal ein Betätigen des Schlosses zuzulassen. Die in dem Schlüsselkopf enthaltene Batterie darf auch bei diesem Schlüssel nicht ausfallen.

Eine Diebstahlsidierung der eingangs genannten Art ist aus der DE—A—29 26 304 bekannt, den am Fahrzeugschlüssel befestigten Sender über Stromanschlüsse mit Strom zu versorgen, die in der Arbeitsstellung des Schlüssels mit Stromanschlüssen der Fahrzeugbatterie verbunden sind. Ein in zwei Stellungen einsteckbarer Schlüssel ist hierbei nicht verwendbar, da in der zweiten Stellung eine Verbindung der Stromanschlüsse nicht erfolgt.

Aufgabe der Erfindung ist es, eine Diebstahlsicherung der eingangs genannten Art so zu verbessern, daß ein in zwei um 180 Grad unterschiedlichen Stellungen einsteckbarer Schlüssel verwendbar ist, wobei in beiden Stellungen eine Stromversorgung der Schlüsselelektronik erfolgt.

Diese Aufgabe wird erfindungsgemäß dadurch gelöst, daß bei einem Schloß mit in zwei Drehstellungen einsteckbarem Schlüssel das Schloß zwei diametral gegenüberliegende Gegenkontakte bzw. kontaktflächen aufweist.

Ein solcher Schlüssel ist in beiden Einsteckdrehstellungen bei eingestecktem Schaft auf die eigene Stromquelle nicht angewiesen, sondern kann die Stromquelle des Kraftfahrzeuges nutzen. Dier erhöht die Bequemlichkeit und Zuverlässigkeit der Schloßanlage.

Vorzugsweise wird vorgeschlagen, daß das Schloß einen Zylinderkern mit mechanischen Zuhaltungen aufweist und der Stromkreis erst nach Drehen des Schlüssels durch den Schlüssel schließbar ist, Hierdurch kann der Schlüssel den codierten Impuls nur dann senden, wenn der Schlüssel im Schloß gedreht wurde, so daß hierfür die Voraussetzung gegeben sein muß, daß der Schlüssel mechanisch paßt. Dies führt zu einer wesentlichen Erhöhung der Schließverschiedenheit. Selbst ein Zerstören des meshcniaschen Teils führt nicht zu einem Überwinden des Schlosses. Wird das Schloß zerstört, wird damit auch der empfangene Teile zerstört und damit erst recht die Möglichkeit genommen, den Sendeimpuls aufzunehmen.

Darüber hinaus ist es bei eingestecktem Schlüssel nicht erforderlich, am Schlüsselkopf einen Schalter zu betätigen, um den Impuls abzugeben. Vielmehr können der oder die Kontaktflächen am Schloß derart angeordnet sein, daß bei Drehen des Schlüssels der Kontakt des Schlüssels die Kontaktfläche des Schlosses in der Drehstellung erreicht, in der der Impuls gesendet werden soll. Die Handhabung des Schlüssels wird somit wesentlich vereinfacht.

Ferner wird vorgeschlagen, daß der Schlüssel mindestens einen Kontakt aufweist, der in einer Schlüsseldrehstellung ungleich der Einsteckstellung einen Gegenkontakt des Schlosses berührt. Hierbei können die Kontaktflächen des Schlosses von dem Schlüssel nur in einer bestimmten Drehstellung erreichbar sein.

Um zu erübrigen, daß während oder nach dem Drehen des Schlüssels es erforderlich ist, daß ein Schalter am Schlüssel betätigt werden muß, um ein Signal auszusenden, wird vorgeschlagen, daß bei Berühren des Kontaktes des Schlüssels mit dem Kontakt des Schlosses der Schlüssel ein Signal aussendet, das vom Empfangsteil des Schlosses aufgenomen wird.

Besonders einfach ist die Konstruktion dann, wenn der Kontakt an dem dem Schloß zugewandten Bereich des Schlüsselkopfes ist und einen Gegenkontakt an der Schlüsseleinführseite des Schlosses berührt. Die Kontaktsicherheit wird dadurch erhöht, daß der Kontakt des Schlüsselkopfes beweglich und zum Schloß hin federbeaufschlagt ist.

Ferner wird vorgeschlagen, daß der Kontakt des Schlüsselkopfes auf einer kreis- oder teilkreisförmigen Kontaktbahn der Schloßstirnseite anliegt. Auch kann der Schlüsselkopf ein Signal in Form von Wellen, insbesondere eine Infrotsignal zum Schloß, insbesondere in den Schlüsselkanal senden.

Ein Ausführungsbeispiel der Erfindung ist in den Zeichnungen dargestellt und wird im folgenden näher beschrieben. Es zeigen:

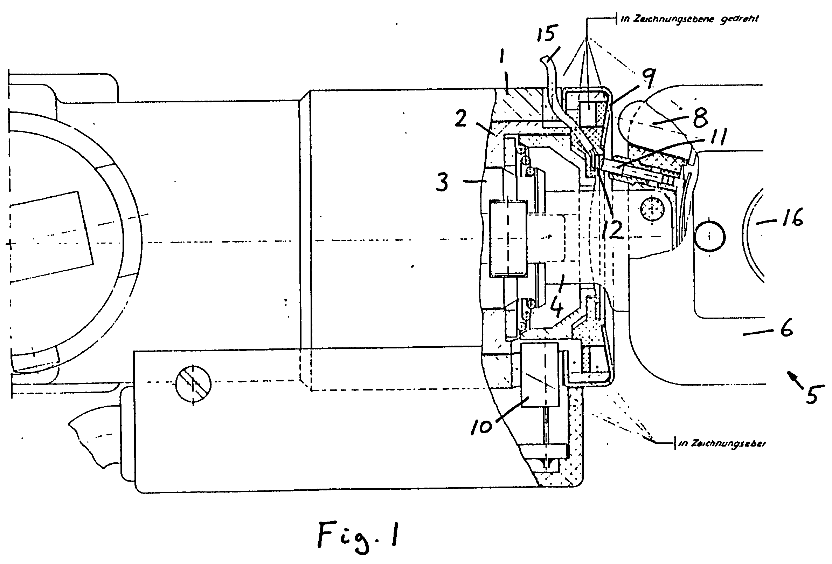

Fig. 1 eine Seitenansicht eines Lenkschlosses mit eingestecktem Schlüssel und in teilweisem Längsschnitt,

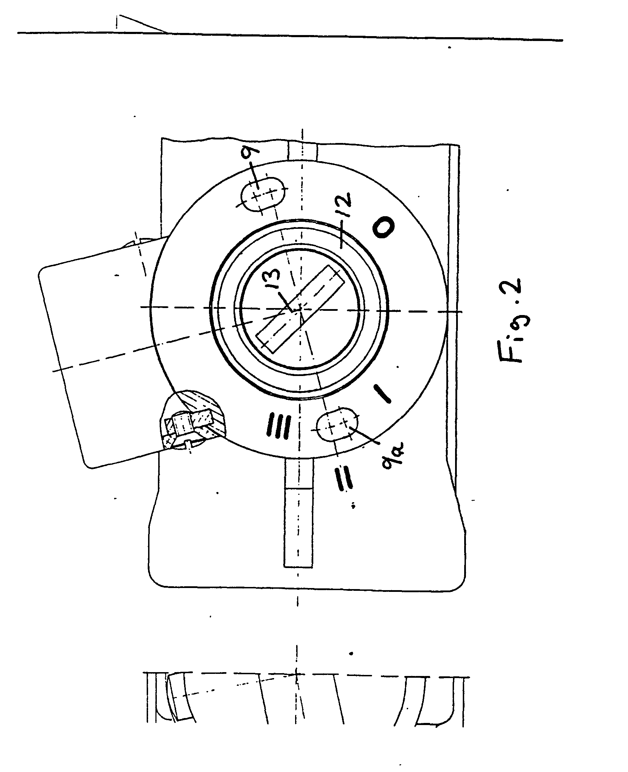

Fig. 2 eine Stirnansicht des Schlosses bei abgezogenem Schlüssel und

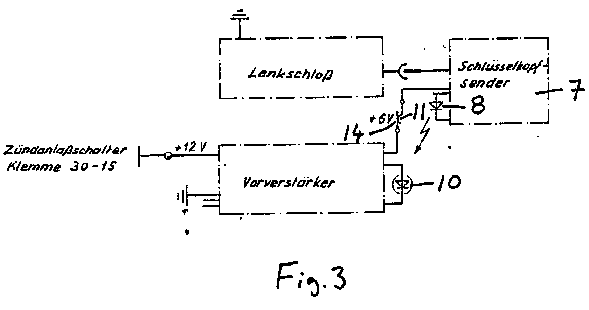

Fig. 3 die elektrische Verbindung von Schloß, Schlüssel und Vorverstärker.

Im zylindrischen Schloßaufnahmegehäuse 1 eines Lenkschlosses ist koaxial ein zylindrisches Zylindergehäuse 2 eingesetzt, in dem koaxial der Zylinderkern 3 drehbar ist. In den Schlüsselkanal des Zylinderkerns 3 ist der Schaft 4 eines Schlüssels 4 einführbar, dessen Kopf 6 einen Sender 7 mit Stromquelle enthält, der über eine Sendediode 8 ein Stahlensignal insbesondere im Infrarotbereich zum Schloß hin abgibt. Hierzu ist die Sendediode 8 auf der dem Schloß zugewandten Seite des Schlüsselkopfes 6 angeordnet. Mit diesem Schlüssel kann somit aus der Entfernung die Schließanlage eines Kraftfahrzeuges betätigt werden.

Das codierte Sendesignal gelangt durch ein Fenster 9 an der Stirnseite des Schlosses zu einer Empfangsdiode 10 im Schloßinneren, die das Signal zu einem Verstärker führt, der das Signal einer elektrischen Decodierungsschaltung übergibt. Bei richtigen Code- und Wellenbereich wird ein Schloßteil entriegelt und/oder ein für das Ingangsetzen des Kraftfahrzeuges notwendiger Schalter betätigt. An der dem Schloß zugewandten Seite des Schlüsselkopfes 6 steht ferner ein Kontaktstift 11 vor, der längsbeweglich und zum Schluß hin federbeaufschlagt ist und dessen freies Ende bei eingestecktem Schlüssel auf einer kreis- oder teilkreisförmigen Kontaktbahn (Schleifring) 12 aufliegt. Diese koaxiale, auf der Schloßstirnseite angeordnete kreis- oder teilkreisförmige Kontaktbahn 12 umgibt die äußere Einführungsöffnung 13 des Schlüsselkanals und bildet nur eine Kontaktfläche, die den Kontaktstift 11 mit der Stromquelle des Kraftfahrzeugs verbindet. In einer Ausführung ist die Kontaktfläche nur an einer bestimmten Stelle angeordnet, so daß der Kontaktstift 11 diese Kontaktstelle 14 nur dann erreicht, wenn er aus der Einsteckstellung herausgedreht wird und insbesondere sich in der Fahrtund/oder Anlaßstellung befindet. An der Kontaktstelle 14 ist ein elektrisches Kanal 15 angeschlossen, das zur Stromquelle des Kraftfahrzeugs führt.

In dem Fall, in dem der Schlüssel in zwei um 180° unterschiedlich Drehstellungen in das Schloß einsteckbar ist, kann der Kontaktstelle 14 diametral gegenüber eine zweite Kontaktstelle in der Kontaktbahn 12 angeordnet sein. In diesem Fall weist die Schloßstirnseite auch eine zweites Fenster 9a diametral gegenüber dem ersten Fenster 9 auf.

Wird der Schlüssel 5 eingesteckt, so müssen die Einschnitte oder Vertiefungen des Schlüsselschaftes 4 dem Code der Schloßzuhaltungen entsprechen, um dem Schlüssel drehen zu können. Während des Drehens des Schlüssels und damit auch des Zylinderkerns 3 erreicht der Kontaktstift 11 des Schlüsselkopfes 6 die Kontaktstelle 14, so daß der Sender im Schlüsselkopf aktiviert wird und die Sendediode 8 ein Sendesignal insbesondere im Infrarotbereich abgibt. Dieses Signal dringt durch das Fenster 9 oder 9a und wird von der Empfangsdiode aufgenommen.

Der Schlüsselkopf kann zusätzlich einen Schaltknopf 16 aufweisen, um auch bei herausgezogenem Schlüssel ein anderes Sendesignal zum Öffnen der Kraftfahrzeugtüren abzugben.

**Patentansprüche**

1. Diebstahlsicherug für Kraftfahrzeuge mit einem Schließzylinder, in den ein Schlüssel (5) einschiebbar ist, der eine elektronsiche Betätigung des Schlosses erzeugt und der bei vollständigem Einstecken einen Stromkreis schließt, um den elektronischen Teil der Diebstahlsicherung in Gang zu setzen, wobei der Schlüssel (5) einen zum Schloß hin vorstehenden Kontakt, insbesondere Kontaktstift (11) aufweist, der nach Einstecken des Schlüssels in einer Schlüsseldrehstellung ungleich der Einsteckstellung einen Gegenkontakt (14) des Schlosses berührt, dadurch gekennzeichnet, daß bei einem Schloß mit in zwei Drehstellungen einsteckbarem Schlüssel (5) das Schloß zwei diametral gegenüberliegenden Gegenkontakte bzw. kontaktflächen (14) aufweist.

2. Diebstahlsicherung nach Anspruch 1, dadurch gekennzeichnet, daß das Schloß einen Zylinderkern (3) mit mechanischen Zuhaltungen aufweist und der Stromkreis erst nach Drehen des Schlüssels (5) durch den Schlüssel schließbar ist.

3. Diebstahlsicherung nach Anspruch 1 oder 2, dadurch gekennzeichnet, daß die gegenkontaktflächen (14) des Schlosses von dem Schlüssel (5) nur in einer bestimmten Drehstellung erreichbar sind.

4. Diebstahlsicherung nach Anspruch 3, dadurch gekennzeichnet, daß bei Berühren des Kontaktes (11) des Schlüssels (5) mit dem Gegenkontakt (14) des Schlosses der Schlüssel ein Signal aussendet, das vom Empfangsteil des Schlosses aufgenommen wird.

5. Diebstahlsicherung nach einem der vorherigen Ansprüche, dadurch gekennzeichnet, daß der Kontakt (11) an dem dem Schloß zugewandten Bereich des Schlüsselkopfes (6) ist und einen Gegenkontakt (14) an der Schlüsseleinführungsseite des Schlosses berührt.

6. Diebstahlsicherung nach einem der vorherigen Ansprüche, dadurch gekennzeichnet, daß der Kontakt (11) des Schlüsselkopfes (6) beweglich und zum Schloß hin federbeaufschlagt ist.

7. Diebstahlsicherung nach einem der vorherigen Ansprüche, dadurch gekennzeichnet, daß der Kontakt (11) des Schlüsselkopfes (6) auf einer kreis- oder teilkreisförmigen Kontaktbahn (12) der Schloßstirnseite anliegt.

8. Diebstahlsicherung nach einem der vorherigen Ansprüche, dadurch gekennzeichnet, daß der Schlüsselkopf (6) ein Signal in Form von Wellen, insbesondere ein Infrarotsignal zum Schloß, insbesondere in den Schlüsselkanal sendet.

## Revendications

1. Antivol pour véhicules comportant un barillet dans lequel une clé (5) peut être enfoncée qui actionne une commande électronique de la serrure et qui, après enfoncement complet, ferme un circuit électrique afin d'activer l'élément électronique de l'antivol dans lequel la clé (5) présente, en direction de la serrure, un contact en saillie, plus particulièrement une pointe de contact (11) qui, après introduction de la clé dans une position de rotation différente de la position d'introduction, touche un contact de la serrure, caractérisé en ce que dans une serrure à deux positions d'introduction de la clé (5), la serrure comporte deux contacts ou surfaces de contacts diamétralement opposés (14).

2. Antivol selon la revendication 1, caractérisé en ce que la serrure comporte un rotor (3) avec des arrêts mécaniques et que le circuit électrique ne peut être fermé par la clé (5) qu'après rotation de celle-ci.

3. Antivol selon la revendication 1 ou 2, caractérisé en ce que les surfaces de contact (14) de la serrure ne sont atteintes par la clé (5) que dans une position de rotation déterminée.

4. Antivol selon la revendication 3, caractérisé en ce que lorsque le contact (11) de la clé (5) touche le contact (14) de la serrure, la clé émet un signal reçu par un élément récepteur de la serrure.

5. Antivol selon l'une des revendications précédentes, caractérisé en ce que le contact (11) est disposé sur la zone de la tête de clé (6) dirigée vers la serrure et touche un contact sur la face entrée de la clé de la serrure.

6. Antivol selon l'une des revendications précédentes, caractérisé en ce que le contact (11) de la tête de clé (6) est mobile et poussé élastiquement vers la serrure.

7. Antivol selon l'une des revendications précédentes, caractérisé en ce que le contact (11) de la tête de clé (6) est formé sur une piste circulaire ou en secteur de cercle (12) de la face avant de la serrure.

8. Antivol selon l'une des revendications précédentes, caractérisé en ce que la tête de clé (6) émet un signal ondulatoire, plus particulièrement un signal infrarouge, vers la serrure, en particulier dans le canal de serrure.

## Claims

1. An anti-theft device for motor vehicles comprising a lock cylinder, into which a key (5) can be inserted to cause electronic actuation of the lock, and which when completely inserted closes an electric circuit in order to put into operation the electronic part of the anti-theft device, wherein the key (5) comprises a contact projecting towards the lock, particularly a contact pin (11), which after introduction of the key into a rotational position thereof differing from the insertion position, contacts a mating contact (14) in the lock, characterized in that with a lock comprising a key (5) which can be inserted in two rotational positions, the lock comprises two diametrically opposite mating contacts or mating contact surfaces (14).

2. An anti-theft device according to Claim 1, characterized in that the lock comprises a cylinder core (3) with mechanical tumblers and the electric circuit can only be closed by the key after the key (5) is turned.

3. An anti-theft device according to Claim 1 or 2, characterized in that the mating contact surfaces (14) in the lock can only be reached by the key (5) in a defined rotational position.

4. An anti-theft device according to Claim 3, characterized in that when the contact (11) on the key (5) contacts the mating contact (14) in the lock, the key transmits a signal which is received by the receiving part of the lock.

5. An anti-theft device according to any one of the preceding Claims, characterized in that the contact (11) is located on the head (6) of the key in the region facing the lock and contacts a mating contact (14) on the key-insertion side of the lock.

6. An anti-theft device according to any one of the preceding Claims, characterized in that the contact pin (11) on the head (6) of the key is movable and is driven towards the lock by a spring.

7. An anti-theft device according to any one of the preceding Claims, characterized in that the contact pin (11) on the head (6) of the key bears on a contact path (12) which is circular, or which forms part of a circle, in the front face of the lock.

8. An anti-theft device according to any one of the preceding Claims, characterized in that the head (6) of the key transmits a signal to the lock in the form of waves, especially an infrared signal, particularly in the channel for the key.

Fig. 1

in Zeichnungsebene gedreht

in Zeichnungsebe[n]

EP 0 191 934 B1

Fig. 2

Fig.3